# EUROPEAN PATENT SPECIFICATION

(11) **EP 3 904 089 B1**
(45) Date of publication and mention of the grant of the patent: **18.09.2024**
(21) Application number: 19906259.7
(22) Date of filing: 25.11.2019
(51) Int. Cl.: B32B 27/18, B32B 27/32, C08L 1/02, C08L 21/00, C08L 23/00, C08J 5/18

(54) **CELLULOSE-RAW-MATERIAL-CONTAINING RESIN SHEET**
HARZFOLIE MIT CELLULOSEROHMATERIAL
FEUILLE DE RÉSINE CONTENANT UNE MATIÈRE PREMIÈRE DE CELLULOSE

(30) Priority: 28.12.2018 JP 2018247190
(43) Date of publication of application: 03.11.2021
(73) Proprietor: Eco Research Institute Ltd., Tokyo 150-0036 (JP)
(72) Inventor: MATSUSHITA Takamichi, Tokyo 150-0036 (JP)
(74) Representative: Schön, Christoph
(86) International application number: PCT/JP2019/045977
(87) International publication number: WO 2020/137301

(56) References cited:
- EP-A1- 0 057 967
- WO-A1-2017/061530
- CN-A- 107 955 300
- GB-A- 2 057 458
- JP-A- 2005 068 362
- JP-A- 2011 131 508
- JP-A- 2013 007 030
- JP-A- 2018 154 671
- JP-A- S5 634 737
- JP-A- S57 115 437
- US-A1- 2012 329 917
- US-A1- 2015 045 479

## Description

### [TECHNICAL FIELD]

The present invention relates to a resin sheet containing a cellulose-based raw material, particularly a sheet containing fine paper powder, suitable for molding.

### [BACKGROUND ART]

In recent years, global marine pollution by microplastics has become a problem. Statistics show that about 800 tons of microplastics are released into the ocean each year. It has been pointed out that microplastics are minute plastic particles existing in the environment and have become an enormous problem, especially in the marine environment.

In recent years, recycling of plastics has been actively carried out, but since various additives and coating agents are added to recent plastics, and the quality is not uniform, recycling has become difficult year by year.

For example, PET bottles are sorted and collected by local governments and actively recycled. However, the quality of recycled materials is not stable due to coating materials applied to the PET bottles. As a result, it is pointed out that the use of recycled materials is limited, and their reuse has not progressed. Some statistics indicate that more than half of the recycled materials are incinerated.

Incinerating such waste plastics produces a high calorific value at the time of incineration, which may damage the incinerator. The incineration of plastics is not desirable because it generates large amounts of CO₂ and toxic gases, adversely affecting the environment.

The above problems urged the inventors of the present application to develop a molding material in which fine paper powder, a cellulose-based raw material, is mixed with plastic to reduce the amount of plastic used and protect the environment. The molding material is used as an alternative raw material for plastics in many products. It contributes to environmental protection (see Patent Documents 1 and 2).

### [PRIOR ART DOCUMENT]

[Patent Document 1] JP2011-045866A
[Patent Document 2] JP2011-131508A

### [Summary of the invention]

### [Problem to be solved by the invention]

The fine paper powder-containing resin material described in Patent Document 1 is excellent for injection molding material. It is mainly used for products molded by injection molding because the raw material only needs to be changed from ordinary plastic, and changes in mechanical equipment are almost unnecessary.

Additionally, there are many requests to use the fine paper powder-containing resin material for food containers such as rice packs for microwave ovens. Therefore, the inventors of the present invention have attempted to mold the fine paper powder-containing resin into a sheet shape to cope with such containers.

However, it has become clear that a sheet molded with a fine paper powder-containing resin material for injection molding causes a molding failure in the vacuum molding stage when the sheet is deformed into the shape of a container. As a result, it is impossible to meet the market demand for sheet-like containers, which have been in increasing demand in recent years. In recent years, efforts to consider life cycle assessment have become active in each enterprise. To meet such a demand, it is urgent to provide a sheet-like container made of a resin material containing fine paper powder. In particular, there is a need for a sheet having better vacuum formability than the sheets produced by the production method described in Patent Document 2.

Given the above, it is an object of the present invention to provide a sheet comprising a resin containing a cellulose-based raw material such as fine paper powder, which is particularly suitable for molding.

### [Means for solving the problem]

The cellulose-based raw-material-containing resin sheet is a resin sheet containing a cellulose-based raw material and is characterized by comprising 50-60 mass pts. of a cellulose-based raw material having an average particle size of 20-100 µm, 18-30 mass pts. of a first polyolefin resin having a melt flow rate of 1-3, 5-26 mass pts. of a second polyolefin resin having a melt flow rate of 6-11, and 1-16 mass pts. of an elastomer having a melt flow rate of 6-10, wherein the total of the main raw materials is 100 mass pts., the first polyolefin resin and the second polyolefin resin have a bending elastic modulus of not less than 700 MPa, and the elastomer has a bending elastic modulus of not more than 200 MPa. In the present specification, "melt flow rate" means a melt flow rate measured under conditions of a temperature of 230°C and a load of 2.16 kg in accordance with JIS K7210-1: 2014. In this specification, "bending elastic modulus" means a bending elastic modulus measured in accordance with ASTM D790.

According to the cellulose-based raw-material-containing resin sheet of the present invention, good molding is possible even when vacuum molding is performed. Thus, it is possible to provide a conventional molded article (injection molding, extrusion molding) and a sheet-like cellulose-based raw-material-containing resin such as a container by vacuum molding. Therefore, according to the present invention, further reduction of petrochemical resources such as petroleum products can be promoted.

Further, according to the cellulose-based raw-material-containing resin sheet of the present invention, since a majority of the total mass of the component is a cellulose-based raw material, it is not subject to recycling under the provisions of the Containers and Packaging Recycling Law. Therefore, according to the cellulose-based raw-material-containing resin sheet of the present invention, incineration as a normal waste can be performed after the original use has been completed. In this case, the contained cellulose component lowers the calorie at the combustion time compared with the ordinary plastic, reducing the burden on the incinerator.

As described above, according to the cellulose-based raw-material-containing resin sheet of the present invention, it is possible to play an essential role in responding to life cycle assessment, which has been attracting increasing interest in recent years. Further, reducing the amount of synthetic resin used in the sheet-like container, or the like, has enabled the reduction of microplastics in recent years.

In the cellulose-based raw-material-containing resin sheet of the present invention, the cellulose-based raw material may be fine paper powder, and the fine paper powder may be 51-56 mass pts. of the main raw material. Since paper used as a raw material for fine paper powder is a so-called carbon-free material, the burden on the environment during incineration after use is small. In addition, making the fine paper powder of 51 or more of the main raw material facilitates the fine paper powder to be a majority of the mass of the entire component when it is made into a sheet. Given the fluidity when the material is melted, the fine paper powder is preferably 56 mass pts. or less.

In the cellulose-based raw-material-containing resin sheet of the present invention, both the first polyolefin resin and the second polyolefin resin may be polypropylene. Mixing polypropylene with a cellulose-based raw material, particularly fine paper powder, enables dispersing uniformly, stabilizing the quality when the polypropylene is made into a sheet. In this case, since the elastomer is a copolymer containing propylene as a monomer, the elastomer and polypropylene can be mixed with a high degree of uniformity.

Further, the cellulose-based raw-material-containing resin sheet of the present invention may contain an additive at a ratio of 2 to 10 mass pts. for 100 mass pts. of the main raw material, and the additive may contain 1.8 to 4.0 mass pts. of a dispersant using a higher fatty acid as raw material and 0.2 to 0.5 mass pts. of an external lubricant. This structure allows for a fine paper powder-containing resin sheet having good moldability. The external lubricant is an additive used to reduce friction between a material and a processing machine when processing a powder, solid, or granular material. The additive may further comprise 0 to 6.0 mass pts. of a colorant containing resin.

A polyolefin resin coating layer may be provided on at least one surface in the cellulose-based raw-material-containing resin sheet of the present invention. This structure allows for disposing of the polyolefin resin coating layer on the side where the food is located when the sheet of the present invention is used for a food container. Therefore, the sheet is suitable for a food packaging container.

The cellulose-based raw-material-containing resin sheet of the present invention may further comprise at least one of the following structures (1) to (4).
(1) The mass pts. of the first polyolefin resin and the second polyolefin resin are not less than two times and not more than five times the mass pts. of the elastomer.
(2) The thickness is 0.8 mm or less.
(3) The width is 1000 mm or more.
(4) The ratio of the mass of the cellulose-based raw material to the entire cellulose-based raw material-containing resin sheet is 50% or more.

### [BRIEF DESCRIPTION OF THE DRAWINGS]

[FIG. 1] A cross-sectional view showing a structure of a resin sheet containing a cellulose-based raw material (fine paper powder) according to an embodiment of the present invention.
[FIGS. 2] (A) and (B) are explanatory views showing an apparatus for manufacturing a fine paper powder-containing resin sheet according to the present embodiment.

### [Mode for carrying out the invention]

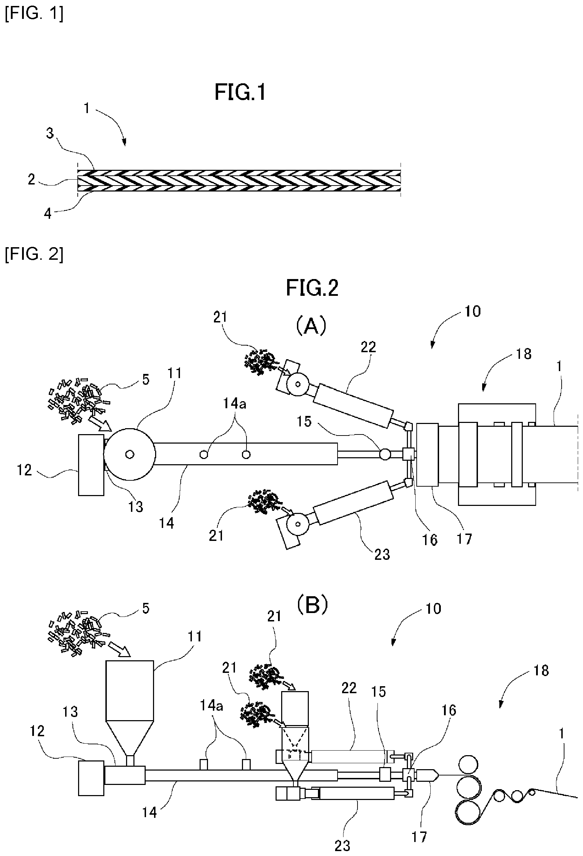

Next, a fine paper powder-containing resin sheet 1 using fine paper powder (fine paper powder) as a cellulose-based raw material is described with reference to FIGS. 1 and 2, as an example of an embodiment of the cellulose-based raw-material-containing resin sheet of the present invention. The fine paper powder-containing resin sheet 1 of the present embodiment is a sheet used in a vacuum molded food container or the like and is composed of the following raw materials.

As shown in FIG. 1, the fine paper powder-containing resin sheet (hereinafter abbreviated as "sheet") 1 of the present embodiment is a resin sheet-like member formed of the core layer 2 made of fine paper powder-containing resin and polypropylene layers (hereinafter abbreviated as "PP layer") 3 and 4 covering the front and back surfaces of the core layer 2. As an example of the embodiment, the thickness of the core layer 2 may be 0.2 to 1.3 mm, and the thickness of the PP layers 3 and 4 may be 8-50 µm. The PP layers 3 and 4 correspond to the polyolefin resin coating layer of the present invention.

The core layer 2 comprises 50-60 mass pts. of fine paper powder having an average particle diameter of 20-100 µm, 18-30 mass pts. of a first polypropylene as a first polyolefin resin having a melt flow rate of 1-3, 5-26 mass pts. of a second polypropylene as a second polyolefin resin having a melt flow rate of 6-11, and 1-16 mass pts. of an elastomer having a melt flow rate of 6-10, wherein the fine paper powder, the first polypropylene, the second polypropylene, and the elastomer are mixed at a ratio such that the total of the fine paper powder, the first polypropylene, the second polypropylene, and the elastomer is 100 mass pts.

In the present specification, the term "polypropylene" means a resin comprising a polymer containing propylene as a monomer and having a bending elastic modulus of 700 MPa or more. Therefore, the bending elastic modulus of the first polypropylene and the second polypropylene is 700 MPa or more.

In this embodiment, the fine paper powder, the first polypropylene, the second polypropylene, and the elastomer are used as the main raw materials. In the present embodiment, 1.8-4.0 mass pts. of a dispersant, 0.2-0.5 mass pts. of an external lubricant, and 0-6.0 mass pts. of a colorant containing resin can be added as additives to 100 mass pts. of the main raw material. Since the mass pts. is used to adjust the mixing ratio of each raw material, a large amount of raw material can be mixed to produce a large amount of sheet 1 at the same ratio as that of the above mass pts.

In this embodiment, the fine paper powder obtained by the finely grinding paper is used as the cellulose-based raw material. As the paper to be used as raw material, for example, torn paper or waste paper generated in a paper mill can be used. Various paper types can be used, such as virgin paper containing virgin pulp, recycled paper, waste paper, etc. As the cellulose-based raw material, it is possible to widely select a raw material containing cellulose, in addition to pulp made from wood, pulp made from non-wood such as Kozo or Edgeworthia chrysantha, and the like.

In the present embodiment, the fine paper powder has a particle size of 20 to 100 µm, but the fine paper powder having a particle size of less than 20 µm requires a plurality of steps to process the pulp or recycled paper as a raw material into a particle size of less than 20 µm, increasing the production cost of the paper powder. As a result, the production cost of the compositions and the molded products using the composition increases, which is not preferable. When the particle size is more than 100 µm, the paper powder may cause poor dispersion in the synthetic resin, the paper powder may form a bulky joint powder in the synthetic resin, and the bulky joint powder may remarkably lower the fluidity of the composition.

In the present embodiment, the fine paper powder has a mass of 50-60 mass pts. when the mass pts. of the main raw material is 100. With such a mass ratio, the mass ratio of the fine paper powder can be set to 50% or more in sheet 1, in which the core layer 2 and the PP layers 3 and 4 are combined. As a result, since the majority of the mass of the entire component of sheet 1 is the cellulose-based raw material, sheet 1 is not subject to recycling under the provisions of the Containers and Packaging Recycling Law and thus can be easily processed after use.

Technically, it is easy to make the mass pts. of the fine paper powder less than 50 mass pts. On the other hand, when the fine paper powder exceeds 60 mass pts., the fluidity at the time of melting the material is lowered. Thus it becomes difficult to form sheet 1. As a result of various experiments conducted by the inventors of the present application and others, it is preferable to set the mass pts. of the fine paper powder to 51 or more to set the mass ratio of the fine paper powder to 50% or more. Given the fluidity when melting the material, the fine paper powder is preferably 56 mass pts. or less.

In this embodiment, the first polypropylene and second polypropylene have different melt flow rates as synthetic resin. The first polypropylene has a melt flow rate of 1-3. The second polypropylene has a melt flow rate of 6-11. Thus, in the present embodiment, the first polypropylene with low fluidity and the second polypropylene with relatively high fluidity are mixed and used.

The first polypropylene with low fluidity improves elongation during processing, such as vacuum molding when forming sheet 1. On the other hand, if the ratio of the first polypropylene is too high, the fluidity of the molten raw material at the time of producing sheet 1 becomes low. Thus it becomes difficult to produce the wide sheet 1.

The second polypropylene having low fluidity is mixed with the first polypropylene to improve the fluidity of the molten raw material when sheet 1 is produced. On the other hand, if the ratio of the second polypropylene is too high, the elongation at the time of processing, such as vacuum molding when sheet 1 is formed, is lowered, and the workability tends to deteriorate.

In this embodiment, by adjusting the mixing ratio of the first polypropylene and the second polypropylene, it is possible to manufacture sheet 1 with high manufacturing efficiency and high workability. The mixing ratio of the first polypropylene and the second polypropylene is adjusted in relation to the mixing ratio of the cellulose-based raw material within the above-mentioned mass range.

In this embodiment, the melt flow rate of the first polypropylene is set to 1-3 and the mass pts. thereof is set to 18-30 mass pts. When the melt flow rate of the first polypropylene is less than 1, there is a possibility that the fluidity at the time of melting the raw material cannot be ensured. On the other hand, when the melt flow rate of the first polypropylene exceeds 3, the difference between the first polypropylene and the second polypropylene becomes small. There is a possibility that the elongation during processing when sheet 1 is used becomes insufficient.

In the present embodiment, the mass pts. of the first polypropylene is 18-30 when the mass pts. of the main raw material is 100, but when the mass pts. is less than 18, the elongation during processing when the sheet 1 is used may be insufficient, and when the mass pts. exceed 30, the fluidity may not be ensured when the raw material is melted.

Further, in this embodiment, the melt flow rate of the second polypropylene is 6-11 and the mass pts. thereof are 5-26. When the melt flow rate of the second polypropylene is less than 6, the fluidity of the raw material at the time of melting may become insufficient. On the other hand, when the melt flow rate of the second polypropylene exceeds 11, there is a possibility that the elongation during processing when sheet 1 is used may be insufficient.

In the present embodiment, the mass pts. of the second polypropylene is 5-26 when the mass pts. of the main raw material is 100. Suppose it is less than 5 mass pts. In that case, there is a possibility that fluidity at the time of melting the raw material cannot be ensured. If it is more than 26 mass pts., there is a possibility that elongation at the time of processing when the sheet 1 is used may be insufficient.

In the present embodiment, 1-16 mass pts. of an elastomer having a melt flow rate of 6-10 is added to the material. Elastomer is a generic name for rubber-like elastic polymers. It includes so-called "rubber," which is a flexible elastomer from materials generally called elastomers. A flexible elastomer such as styrene, vinyl chloride, olefin, urethane, or styrene elastomer can be used as the elastomer.

The elastomer, according to the present embodiment, preferably has a bending elastic modulus of 200 MPa or less. Since the sheet according to the present embodiment includes a polypropylene resin having a bending elastic modulus of 700 MPa or more and an elastomer having a bending elastic modulus of 200 MPa or less, variations in the thickness of sheet 1 are less likely to occur when the sheet 1 is vacuum molded, although a considerable amount of cellulose-based raw material is contained therein. The elastomer according to the present embodiment is a copolymer containing propylene as a monomer.

Therefore, according to this embodiment, sheet 1 having excellent vacuum formability can be obtained. From the viewpoint of more stably ensuring the excellent vacuum formability of sheet 1, the bending elastic modulus of the first polypropylene and the second polypropylene may be preferably 1000 MPa or more, and the bending elastic modulus of the elastomer may be preferably 100 MPa or less. It may be more agreeable for the elastomer to have a bending elastic modulus of less than 70 MPa.

The melt flow rate of the elastomer is set to 6-10 in this embodiment because when the melt flow rate of the elastomer is less than 6, the fluidity of the raw material at the time of melting may become insufficient. When the melt flow rate exceeds 10, the elongation at the time of processing when sheet 1 is formed may become insufficient.

If the mass pts. of the elastomer is less than 1 when the mass pts. of the main raw material is 100, there is a possibility that the elongation during processing when sheet 1 is used may be insufficient. When the mass pts. of the elastomer exceeds 16 mass pts., there is a possibility that the strength in the case of using sheet 1 may be insufficient.

In the cellulose-based raw-material-containing resin sheet according to the present embodiment, the sum of the mass pts. of the first polypropylene and the mass pts. of the second propylene should be not less than two times and not more than five times the mass pts. of the elastomer. When the ratio (ratio 1) of the sum of the mass pts. of the first polypropylene and the mass pts. of the second propylene to the mass pts. of the elastomer is five or less, the vacuum formability of sheet 1 can be more stably enhanced. When the ratio 1 is two or more, the strength of the cellulose-based raw-material-containing resin sheet can be more stably enhanced.

In addition, in the present embodiment, a dispersant for dispersing fine paper powder in a resin, an external lubricant for preventing so-called eye mucus at the outlet port of the T die 17, is described later. A colorant containing resin for adjusting the coloring of sheet 1 is added as additives to the main raw material. The colorant containing resin may be, for example, a polyethylene resin containing titanium oxide (TiO₂) in the case of white or carbon black in the case of black. The colors are not limited to these white and black, and various colors can be used.

Examples of the dispersant include higher fatty acids, and specific examples thereof include higher fatty acids such as stearic acid, palmitic acid, and myristic acid, organic salts thereof (amides, etc.), and metal salts thereof (calcium salts, magnesium salts, etc.). In this embodiment, by including an elastomer in addition to polypropylene, even though a considerable amount of cellulose-based raw material is contained, variations in the thickness of sheet 1 are less likely to occur when sheet 1 is vacuum molded. Therefore, sheet 1 does not strongly depend on the type and content of the dispersant and has excellent vacuum formability.

The PP layers 3 and 4 use virgin polypropylene as a raw material, having a grade for food containers. The material used for the PP layers 3 and 4 can be a resin material (polypropylene resin) which is generally widely used. The melt flow rate and the like are not particularly limited as long as the material is used for sheet molding.

In the present embodiment, each of the above-mentioned raw materials is put into a pellet manufacturing device (not shown) and heated and kneaded to form a raw material pellet 5. The produced raw material pellet 5 is put into the sheet production apparatus 10 shown in FIG. 2 and finally becomes sheet 1. FIG. 2 is a schematic view showing a sheet manufacturing device 10 for manufacturing sheet 1 of the present embodiment, wherein FIG. 2(A) is a plan view thereof, and FIG. 2(B) is a side view thereof.

As shown in FIG. 2, the sheet manufacturing device 10 includes a main hopper 11 into which raw material pellets 5 are fed, an introduction unit 13 for introducing the raw-material pellets 5 from the main hopper 11, and feeding the raw material pellets 5 to an extruder 14, an extruder 14 for heating and conveying the raw material pellets 5, and a drive unit 12 for driving a screw (not shown) provided in the extruder 14.

Further, in front of the extruder 14, there are provided a gear pump 15 for feeding the molten raw material in which the raw material pellet 5 has been melted to the downstream side, a feed block 16 for joining a polypropylene resin to be described later with the molten raw material and a T die 17 for expanding and extruding the molten resin derived from the feed block 16 in the width direction.

The extruder 14 is provided with an exhaust port 14a for discharging the gas generated when the raw material pellets 5 are heated and conveyed from the inside of the extruder 14. The position and number of the exhaust ports 14a can be appropriately changed according to the processing capacity of the extruder 14.

A polishing roll machine 18 for adjusting the thickness of sheet 1 pushed out from the T die 17, and the like, is provided in front of the T die 17. In front of the polishing roll machine 18, a thickness measuring device for measuring the thickness of sheet 1, a cutter for cutting sheet 1, a winder for winding sheet 1, and the like, are provided (neither is shown).

As shown in FIG. 2 a, PP feeders 22 and 23 are provided on both sides of the extruder 14 to melt polypropylene resin 21 to be used as raw material and push the molten polypropylene resin 21 into the feed block 16. When the polypropylene resin supplied into the feed block 16 by the PP feeders 22 and 23 is extruded from the T die 17, the polypropylene resin covers both the front and back surfaces of the core layer 2 as the PP layers 3 and 4.

In FIG. 2(B), the PP feeders 22 and 23 are arranged above and below the extruder 14 to clearly show the PP feeders 22 and 23. However, in reality, the PP feeders 22 and 23 are arranged at substantially the same height as the extruder 14. Using such a sheet manufacturing device 10, according to this embodiment, enables manufacturing a sheet 1 with a core layer 2 having a width of 1000 mm or more. According to the manufacturing method described above, the thickness of sheet 1 can be manufactured in a range of 0.3-1.3 mm. It can be stably manufactured in a range of 0.3-0.8 mm.

(Example 1) Next, Example 1 of the present invention is described. As shown in Table 1, the core layer 2 of sheet 1 of Example 1 is composed of 53 mass pts. of fine paper powder (trade name GSP: Eco Research Institute), 28 mass pts. of first polypropylene (trade name HJ340: Hyusung) having a melt flow rate ("MFR" in the table) of 1.1 (230°C., 2.16 Kg, g/10 min: the same applies hereinafter) and a bending elastic modulus of 16000 kgf/cm² (1569 MPa), 5 mass pts. of second polypropylene (trade name M1400: LG Chemical) having a melt flow rate of 7.4 and a bending elastic modulus of 12000 kgf/cm² (1176 MPa), and 14 mass pts. of elastomer (trade name VS3401: Dow Chemical) having a melt flow rate of 8 and a bending elastic modulus of 20 MPa.

Further, in the core layer 2 of sheet 1 of Example 1, 3 mass pts. of calcium stearate (trade name: Ca-St: Nitto Chemical Industry) as a dispersing agent, 0.2 mass pts. of a resin-modifying agent (trade name: L-1000: Mitsubishi Chemical Co., Ltd.) as an external lubricant, and 3 mass pts. of titanium oxide-containing polyethylene resins (trade name: GW2070: Dainichiseika Color & Chemicals Manufacturing) as colorant containing resins are additionally mixed. In sheet 1 of the first embodiment, the core layer 2 has a thickness of 0.3 mm-1.3 mm. PP layers 3 and 4 having a thickness of 10-50 µm are provided on both sides of the core layer 2.

(Example 2) Next, Example 2 of the present invention will be described. As shown in Table 1, the sheet (not shown) of Example 2 is different from Example 1 in that the second polypropylene (trade name: J640: Hyusung) is a different product from Example 1, the melt flow rate is 10.6, and the bending elastic modulus is 13000 kgf/cm² (1274 MPa). The colorant containing resins are 2 mass pts. of carbon black-containing polyethylene resins (trade name: PE-M SSC 90086 (KE) - F BLACK: Dainichiseika Color & Chemicals Manufacturing). Since the other components are the same as those in Example 1, a detailed description thereof is omitted.

(Example 3) Next, Example 3 of the present invention will be described. As shown in Table 1, the sheet (not shown) of Example 3 differs from Example 1 in that the mass pts. of the first polypropylene (trade name HJ340: Hyusung) is 20, and the mass pts. of the second polypropylene (trade name J640: Hyusung) is 25, which is a product different from Example 1.

In addition, unlike Example 1, 2 the mass pts. of an elastomer (trade name VM3000: ExxonMobile) having a melt flow rate of 8 and a bending elastic modulus of 62.4 MPa are used. In addition, it is different from Example 1 in that the mass pts. of titanium oxide-containing polyethylene resins (trade name GW2070: Dainichiseika Color & Chemicals Manufacturing) which are colorant containing resins, is 6. Since the other components are the same as those in Example 1, a detailed description thereof is omitted.

(Comparative Example 1) Next, Comparative Example 1 is described. In Comparative Example 1, a fine paper powder (trade name: GSP: Eco Research Institute) of 51 mass pts., a second polypropylene having a melt flow rate of 10.6 (trade name: J640: Hyusung) of 39 mass pts., and an elastomer having a melt flow rate of 8 and a bending elastic modulus of 62.4 MPa (trade name: VM3000: ExxonMobile) of 10 mass pts. are mixed to form a main raw material.

Further, in the core layer 2 of sheet 1 of Comparative Example 1, 2 mass pts. of calcium stearate (trade name Ca-St: Nitto Chemical Industry) as a dispersing agent, 0.5 mass pts. of a resin-modifying agent (trade name L-1000: Mitsubishi Chemical Co., Ltd.) as an external lubricant, 7 mass pts. of titanium oxide-containing polyethylene resins (trade name GW2070: Dainichiseika Color & Chemicals Manufacturing) as colorant containing resins, and 0.2 mass pts. of antioxidants (trade name ADECASTAB AO-60: ADEKA) are additionally mixed. Sheet 1 of Comparative Example 1 does not have the PP layers 3 or 4 as in Example 1.

(Comparative Example 2) Next, Comparative Example 2 of the present invention is described. Comparative Example 2 comprises 55 mass pts. of fine paper powder (trade name GSP: Eco Research Institute), 30 mass pts. of a first polypropylene (trade name HB240T: Hyusung) having a melt flow rate of 0.6 and a bending elastic modulus of 16000 kgf/cm² (1569 MPa), 12 mass pts. of a second polypropylene (J640: Hyusung) having a melt flow rate of 10.4 and a bending elastic modulus of 13000 kgf/cm² (1274 MPa), and 3 mass pts. of an elastomer (trade name VM3000: ExxonMobile) having a melt flow rate of 8 and a bending elastic modulus of 62.4 MPa.

Further, in the core layer 2 of the sheet of Comparative Example 2, 3 mass pts. of calcium stearate (trade name: Ca-St: Nitto Chemical Industry) as a dispersing agent, 0.5 mass pts. of a resin-modifying agent (trade name: L-1000: Mitsubishi Chemical Co., Ltd.) as an external lubricant, 3 mass pts. of titanium oxide-containing polyethylene resins (trade name: GW2070: Dainichiseika Color & Chemicals Manufacturing) as colorant containing resins, and 0.2 mass pts. of antioxidants (trade name: ADECASTAB AO-60: ADEKA) are additionally mixed.

(Comparative Example 3) Next, Comparative Example 3 of the present invention is described. Comparative Example 3 comprises 53 mass pts. of fine paper powder (trade name GSP: Eco Research Institute), 22 mass pts. of a first polypropylene (trade name HB240TC: Hyusung) having a melt flow rate of 0.5, 5 mass pts. of a second polypropylene (M1400: LG Chemical) having a melt flow rate of 7.4, 10 mass pts. of an elastomer (trade name VM3000: ExxonMobile) having a melt flow rate of 8, and 10 mass pts. of an elastomer (trade name EP9182: ExxonMobile) having a melt flow rate of 1.2 (190°C).

Further, in the core layer 2 of the sheet of Comparative Example 3, 3 mass pts. of calcium stearate (trade name: Ca-St: Nitto Chemical Industry) as a dispersing agent and 0.2 mass pts. of a resin-modifying agent (trade name: L-1000: Mitsubishi Chemical) as an external lubricant are additionally mixed. In Comparative Example 3, the colorant containing resin is not mixed.

**[Table 1]**

| Raw material name | | Product name | MFR | Example 1 | Example 2 | Example 3 | Comparative Example 1 | Comparative Example 2 | Comparative Example 3 |
|---|---|---|---|---|---|---|---|---|---|
| Main raw materi al | Fine paper powde | GSP | - | 53 | 53 | 53 | 51 | 55 | 53 |
| | First PP | HJ340 | 1.1 | 28 | 28 | 20 | | | |
| | | HB240T | 0.6 | | | | | 30 | |
| | | HB240TC | 0.5 | | | | | | 22 |
| | Second PP | M1400 | 7.4 | 5 | | | | | 5 |
| | | J640 | 10.6 | | 5 | 25 | 39 | 12 | |
| | Elastomer | VS3401 | 8 | 14 | 14 | | | | |
| | | VM3000 | 8 | | | 2 | 10 | 3 | 10 |
| | | EP9182 | 1.2 | | | | | | 10 |
| Additiv e | Dispersant | Ca-St | - | 3 | 3 | 3 | 2 | 3 | 3 |
| | External lubricant | L-1000 | - | 0.2 | 0.2 | 0.3 | 0.5 | 0.5 | 0.2 |
| | Colorant-containing resin | GW2070 | - | 3 | | 6 | 7 | 3 | |
| | | PE-M SSC | - | | 2 | | | | |
| | Antioxidant | AO-60 | - | | | | 0.2 | 0.2 | |

In the above-described Examples 1 to 3 and Comparative Examples 1 to 3, the state of the sheet, the state in which vacuum molding was performed in a predetermined shape, and the strength were evaluated (Table 2). Sheet 1 of Example 1 had no cracks, unevenness, or the like, in the state of the sheet and could be stably formed into a sheet having a width of up to 1050 mm. In addition, when the molded article was made, no cracking or the like occurred, and an excellent result could be obtained. In Example 3, a bridge is generated on the side surface of the sheet during vacuum molding, and the yield in mass production tends to deteriorate somewhat. Still, the quality as a container was good.

On the other hand, in the sheet of Comparative Example 1, a defect in which pinholes (tears) were partially formed in the core layer 2 occurred.

In the sheet of Comparative Example 2, the sheet-formed state was generally good, but when the sheet was formed into a molded product, a defective product lacking in strength, such as a thin part of the plate, was generated in some parts, making the sheet unsuitable as a product. This may be due to the lack of elasticity of the sheet.

Although the sheet of Comparative Example 3 was in an excellent sheet-forming state, when it was made into a molded product, a drop impact test at a temperature of minus 20°C resulted in a failure product, making it unsuitable as a product. This is probably due to the insufficient elasticity of the sheet at low temperatures.

**[Table 2]**

| | Sheet status | Vacuum molding status | Strength | Reason for failure |
|---|---|---|---|---|
| Example 1 | ⊚ | ⊚ | ⊚ | |
| Example 2 | ⊚ | ⊚ | ⊚ | |
| Example 3 | ⊚ | ○ | ⊚ | |
| Comparative Example 1 | Δ | X | - | Insufficient paper powder dispersion causes paper aggregation, tearing of the molded article, and exposure of paper |
| Comparative Example 2 | ○ | Δ | X | Insufficient elastic modulus results in defective molded products. |
| Comparative Example 3 | ⊚ | ○ | X | Failure occurs in the drop impact test at minus 20 degrees C. |
| ⊚ Excellent ○ Good Δ Non-conforming product x Poor - Not evaluated | | | | |

As described above, in Examples 1 to 3 of the present embodiment, a good sheet member can be obtained, an excellent working result can be obtained even when molding is performed, and the strength is also sufficient. On the other hand, in Comparative Examples 1 to 3, the quality of some sheets was not stable, which resulted in non-conformity as a molded product, resulting in a molded product with insufficient strength.

As described above, in Examples 1 to 3 of the present embodiment, good sheet members and molded articles, which were difficult with conventional materials, could be realized at a mass-production level. Thus, since a cellulose-based raw-material-containing resin sheet can be used as a raw material for a sheet-like molded product, further reduction of petrochemical resources such as petroleum products can be promoted. Further, according to the present invention, it is possible to supply an environmentally friendly product such as a reduction in environmental load at the time of incineration of the molded product and a reduction in the number of microplastics.

(Example 4) Cellulose-based raw-material-containing resin pellets for producing a resin sheet 1 satisfying the conditions of the present invention were prepared. The pellets according to Test Nos. 2-1 to 2-6 are formed from a main raw material in which 55 mass pts. of a fine paper powder (Eco Research Institute), 26 mass pts. of a first polypropylene (trade name HJ340: Hyusung) having a melt flow rate of 1.1 (230°C, 2.16 kg, g/10 min: the same applies hereinafter) and a bending elastic modulus of 16000 kgf/cm² (1569 MPa), 8 mass pts. of a second polypropylene (trade name J640: Hyusung) having a melt flow rate of 10.6 and a bending elastic modulus of 13000 kgf/cm² (1274 MPa), and 11 mass pts. of an elastomer (trade name VM3000: ExxonMobile) having a melt flow rate of 8 and a bending elastic modulus of 62.4 MPa are mixed.

Further, 3.1 mass pts. of calcium stearate (trade name Ca-St: Nitto Chemical Industry) as a dispersing agent, 0.1 mass pts. of a resin-modifying agent (trade name L-1000: Mitsubishi Chemical Co., Ltd.) as an external lubricant, and 3 mass pts. of a titanium oxide-containing polyethylene resin (trade name PEF1004WHT: P & P) as a colorant containing resin are additionally mixed. The pellets according to Test Nos. 2-7 and 2-8 are the same as those used in Example 3.

A resin sheet 1 (Test Nos. 2-1 to 2-8) comprising a core layer 2 made of these pellets and PP layers 3 and 4 provided on both sides of the core layer 2 was produced by extrusion molding. Physical properties such as the density of pellets are shown in Table 3, and the physical properties of sheet 1 are shown in Table 4. The physical properties of the pellets were measured by preparing dumbbell-shaped test pieces in accordance with ASTM 638-1. Sheet 1 was provided with PP layers 3 and 4 having a thickness range of 20-80 µm on both sides of the core layer 2. The percentage of the mass of fine paper powder in sheet 1 was 51%.

In Table 3, the MFR (melt flow rate) is a melt flow rate measured in accordance with JIS K7210 1: 2014 (ISO 1133 1: 2011) under conditions of a cylinder temperature of 230°C and a load of 2.16 kg, as described above. The tensile strength (unit: MPa), tensile elastic modulus (unit: MPa), and elongation (unit: %) of the pellet refer to values measured in accordance with JIS K7161 (ISO 527-1: 2012).

In Table 4, the tensile yield strength (unit: MPa), tensile fracture strength (unit: MPa), and tensile fracture elongation (unit: %) for sheet 1 are all values measured in accordance with JIS K6251 (ISO 37: 2011). Table 4 shows the measurement results of the respective physical properties in the resin flow direction (MD, extrusion direction), the width direction (TD, vertical direction) of sheet 1 perpendicular to MD, and the average values of MD and TD.

**[Table 3]**

| Test number | Density (g/cm³) | MFR (230 ° C, 2.16 kg) | Tensile strength (M Pa) | Tensile elastic modulus (MPa) | Elongation (%) |
|---|---|---|---|---|---|
| 2-1 | 1.154 | 0.9 | 11.6 | 1917 | 63.1 |
| 2-2 | 1.154 | 0.9 | 11.6 | 1917 | 63.1 |
| 2-3 | 1.157 | 0.9 | 11.6 | 1892 | 60.7 |
| 2-4 | 1.154 | 0.9 | 11.6 | 1917 | 63.1 |
| 2-5 | 1.157 | 0.9 | 11.6 | 1892 | 60.7 |
| 2-6 | 1.157 | 0.9 | 11.6 | 1892 | 60.7 |
| 2-7 | 1.186 | 1.2 | 15 | 2540 | 3.5 |
| 2-8 | 1.186 | 1.2 | 15 | 2540 | 3.5 |
| Patent Document 2 | 1.15 | 0.6 | 24.5 | 3873 | 2.7 |

For comparison, Table 3 shows the physical properties of pellets produced by the technique disclosed in Patent Document 2. Since the pellet according to Patent Document 2 has an MFR (melt flow rate) of 0.6 or less, it is inferior to the pellet according to Test Nos. 2-1 to 2-8, and it is particularly impossible to produce a thin sheet of 0.8 mm or less. Further, since the pellet according to Patent Document 2 has a high tensile elastic modulus, the degree of freedom of drawing in vacuum molding is low. Since the pellet according to Test Nos. 2-1 to 2-8 has a melt flow rate of 0.7 to 1.5 and a tensile elastic modulus of 2600 MPa or less, a thin sheet can be easily produced, vacuum formability is excellent, and drawing can be easily performed. Further, since the pellet according to Test Nos. 2-1 to 2-8 has an elongation of 3% or more, it is difficult to break during vacuum molding.

**[Table 4]**

| The sheets of test numbers 2-7 and 2-8 do not fall within the scope of the appended claims | | | | | | | | | | | |
|---|---|---|---|---|---|---|---|---|---|---|---|
| Test No. | Thick ness (mm) | Width (mm) | Tensile yield strength (MPa) | | | Tensile fracture strength (MPa) | | | Tensile fracture elongation (%) | | |
| | | | MD | TD | Average | MD | TD | Average | MD | TD | Average |
| 2-1 | 0.3 | 750 | 10.3 | 5.3 | 7.8 | 17.1 | 7.2 | 12.2 | 87.4 | 131.2 | 109.3 |
| 2-2 | 0.4 | 750 | 9.4 | 5.3 | 7.35 | 14 | 8 | 11 | 110 | 137 | 123.5 |
| 2-3 | 0.5 | 750 | 6.2 | 4.4 | 5.3 | 9.9 | 6 | 7.95 | 129.7 | 125.8 | 127.75 |
| 2-4 | 0.6 | 750 | 4.8 | 3.7 | 4.25 | 7.6 | 4.8 | 6.2 | 159.2 | 109.8 | 134.5 |
| 2-5 | 0.7 | 750 | 6.2 | 5 | 5.6 | 9.2 | 6.5 | 7.85 | 143 | 112.2 | 127.6 |
| 2-6 | 0.8 | 750 | 7.2 | 5.4 | 6.3 | 9.5 | 7.2 | 8.35 | 139.7 | 113.7 | 126.7 |
| 2-7 | 1.2 | 565 | 8 | 6.1 | 7.05 | 4.1 | 4.5 | 4.3 | 7.1 | 29.3 | 18.2 |
| 2-8 | 1.25 | 530 | 7.5 | 6.8 | 5.3 | 4 | 5.3 | 4.65 | 9.3 | 25.2 | 17.25 |

The pellets used to make sheet 1 of test numbers 2-7 and 2-8 which do not fall within the scope of the appended claims were of the same material as the pellets used to make sheet 1 of Example 3. Further, the percentage of the mass of the cellulose-based raw material (fine paper powder) in sheet 1 was 45-55%.

Sheet 1 according to Test Nos. 2-1 to 2-6 has a thickness of 0.3 mm or more and 0.8 mm or less. The average value of the tensile fracture elongation between the resin flow direction and the vertical direction is 100% or more. The average value of the tensile yield strength between the resin flow direction and the vertical direction is 4 MPa or more. Sheet 1 is excellent in vacuum formability.

The PP layers 3 and 4 are provided on both sides of the core layer 2 except for the Comparative Example 1. If necessary, only one PP layer 3 or PP layer 4 may be used. A packaging container may be formed only by the core layer 2 if it is not used for food.

Both the first polyolefin resin and the second polyolefin resin are polypropylene, but other polyolefin resins such as polyethylene may be used.

Similarly, although a polypropylene resin is used as the polyolefin resin coating layer, other polyolefin resins such as polyethylene resin may be used instead of the polypropylene resin.

### [Explanation of Reference Symbols]

1: Resin sheet containing fine paper powder (cellulose-based raw-material-containing resin sheet)
2: Core layer
3, 4: PP layer (Polyolefin coating layer)
5: Raw material pellet
10: Sheet manufacturing device
11: Main hopper
12: Drive unit
13: Introduction unit
14: Extruder
14a: Exhaust port
15: Gear pump
16: Feed block
17: T-die
18: Polishing roll machine
21: Polypropylene resin
22 and 23: PP feeder

## Claims

1. A resin sheet containing a cellulose-based raw material, comprising main raw materials in a ratio in which a total thereof becomes 100 mass pts., the main raw materials consisting of:
50 to 60 mass pts. of a cellulose-based raw material having an average particle size of 20 to 100 µm;
18 to 30 mass pts. of a first polyolefin resin having a melt flow rate of 1 to 3 measured in accordance with JIS K7210-1: 2014 under conditions of a temperature of 230°C and a load of 2.16 kg;
5 to 26 mass pts. of a second polyolefin resin having the melt flow rate of 6 to 11; and
1 to 16 mass pts. of an elastomer having the melt flow rate of 6 to 10,
wherein the first polyolefin resin and the second polyolefin resin have a bending elastic modulus measured in accordance with ASTM D790 of not less than 700 MPa, and the elastomer has the bending elastic modulus of not more than 200 MPa.

2. The cellulose-based raw-material-containing resin sheet according to claim 1,
wherein the cellulose-based raw material is a fine paper powder, and the main raw material comprises 51 to 56 mass pts. of the fine paper powder.

3. The cellulose-based raw-material-containing resin sheet according to claim 1 or 2,
wherein the first polyolefin resin and the second polyolefin resin are both polypropylene, and
the elastomer is a copolymer comprising propylene as a monomer.

4. The cellulose-based raw-material-containing resin sheet according to any one of claims 1 to 3,
comprising an additive in a ratio of 2 to 10 mass pts. with respect to 100 mass pts. of the main raw material, and
the additive comprises 1.8 to 4.0 mass pts. of a dispersant comprising a higher fatty acid as raw material and 0.2 to 0.5 mass pts. of an external lubricant.

5. The cellulose-based raw-material-containing resin sheet according to claim 4,
wherein the additive further comprises 0 to 6.0 mass pts. of a dye-containing resin.

6. The cellulose-based raw-material-containing resin sheet according to any one of claims 1 to 5,
wherein a polyolefin resin coating layer is provided on at least one surface thereof.

7. The cellulose-based raw-material-containing resin sheet according to any one of claims 1 to 6,
wherein the mass pts. of the first polyolefin resin and the mass pts. of the second polyolefin resin are not less than 2 times and not more than 5 times the mass pts. of the elastomer.

8. The cellulose-based raw-material-containing resin sheet according to any one of claims 1 to 7,
wherein a thickness of which is 0.8 mm or less.

9. The cellulose-based raw-material-containing resin sheet according to any one of claims 1 to 8,
wherein a width of which is 1000 mm or more.

10. The cellulose-based raw-material-containing resin sheet according to any one of claims 1 to 9,
wherein a ratio of a mass of the cellulose-based raw material to a total mass of the cellulose-based raw-material-containing resin sheet is 50% or more.

## Patentansprüche

1. Einen Rohstoff auf Zellulosebasis enthaltende Harzfolie, die Hauptrohstoffe in einem Verhältnis umfasst, deren Summe 100 Massenteile ergibt, wobei die Hauptrohstoffe aus Folgenden bestehen:
50 bis 60 Massenteile eines Rohstoffs auf Zellulosebasis mit einer durchschnittlichen Partikelgröße von 20 bis 100 µm;
18 bis 30 Massenteile eines ersten Polyolefinharzes mit einem Schmelzflussindex von 1 bis 3, gemessen gemäß JIS K7210-1:2014 unter den Bedingungen einer Temperatur von 230 °C und einer Last von 2,16 kg;
5 bis 26 Massenteile eines zweiten Polyolefinharzes mit einem Schmelzflussindex von 6 bis 11; und
1 bis 16 Massenteile eines Elastomers mit einem Schmelzflussindex von 6 bis 10,
wobei das erste Polyolefinharz und das zweite Polyolefinharz einen gemäß ASTM D790 gemessenen Biegeelastizitätsmodul von nicht weniger als 700 MPa aufweisen und das Elastomer einen Biegeelastizitätsmodul von nicht mehr als 200 MPa aufweist.

2. Die einen Rohstoff auf Zellulosebasis enthaltende Harzfolie gemäß Anspruch 1, wobei der Rohstoff auf Zellulosebasis ein feines Papierpulver ist und der Hauptrohstoff 51 bis 56 Massenteile des feinen Papierpulvers umfasst.

3. Die einen Rohstoff auf Zellulosebasis enthaltende Harzfolie nach Anspruch 1 oder 2, wobei sowohl das erste Polyolefinharz als auch das zweite Polyolefinharz Polypropylen sind, und
das Elastomer ein Copolymer ist, das Propylen als ein Monomer umfasst.

4. Die einen Rohstoff auf Zellulosebasis enthaltende Harzfolie nach einem der Ansprüche 1 bis 3,
die einen Zusatzstoff in einem Anteil von 2 bis 10 Massenteilen, bezogen auf 100 Massenteile des Hauptrohstoffs, umfasst, und
wobei der Zusatzstoff 1,8 bis 4,0 Massenteile eines Dispergiermittels, das als Rohstoff eine höhere Fettsäure umfasst, und 0,2 bis 0,5 Massenteile eines externen Schmiermittels umfasst.

5. Die einen Rohstoff auf Zellulosebasis enthaltende Harzfolie gemäß Anspruch 4, wobei der Zusatzstoff ferner 0 bis 6,0 Massenteile eines einen Farbstoff enthaltenden Harzes umfasst.

6. Die einen Rohstoff auf Zellulosebasis enthaltende Harzfolie gemäß einem der Ansprüche 1 bis 5,
wobei auf mindestens einer ihrer Oberflächen eine Beschichtungsschicht eines Polyolefinharzes vorgesehen ist.

7. Die einen Rohstoff auf Zellulosebasis enthaltende Harzfolie gemäß einem der Ansprüche 1 bis 6,
wobei die Massenteile des ersten Polyolefinharzes und die Massenteile des zweiten Polyolefinharzes nicht weniger als das Zweifache und nicht mehr als das Fünffache der Massenteile des Elastomers betragen.

8. Die einen Rohstoff auf Zellulosebasis enthaltende Harzfolie gemäß einem der Ansprüche 1 bis 7,
wobei deren Dicke 0,8 mm oder weniger beträgt.

9. Die einen Rohstoff auf Zellulosebasis enthaltende Harzfolie gemäß einem der Ansprüche 1 bis 8,
wobei deren Breite 1000 mm oder mehr beträgt.

10. Die einen Rohstoff auf Zellulosebasis enthaltende Harzfolie gemäß einem der Ansprüche 1 bis 9,
wobei das Verhältnis einer Masse des Rohstoffs auf Zellulosebasis zu einer Gesamtmasse der einen Rohstoff auf Zellulosebasis enthaltenden Harzfolie 50 % oder mehr beträgt.

## Revendications

1. Feuille de résine contenant une matière première à base de cellulose, comprenant des matières premières principales dans un rapport tel que leur somme équivaut à 100 parties en masse, les matières premières principales étant constituées de :
50 à 60 parties en masse d'une matière première à base de cellulose ayant une taille de particule moyenne de 20 à 100 µm ;
18 à 30 parties en masse d'une première résine de polyoléfine ayant un indice de fluidité à chaud de 1 à 3 mesuré selon la norme JIS K7210-1 : 2014 sous les conditions d'une température de 230 °C et d'une charge de 2,16 kg ;
5 à 26 parties en masse d'une seconde résine de polyoléfine ayant un indice de fluidité à chaud de 6 à 11 ; et
1 à 16 parties en masse d'un élastomère ayant un indice de fluidité à chaud de 6 à 10,
la première résine de polyoléfine et la seconde résine de polyoléfine ayant un module élastique de courbure mesuré selon la norme ASTM D790 de pas moins de 700 MPa et l'élastomère ayant un module élastique de courbure de pas plus de 200 MPa.

2. Feuille de résine contenant une matière première à base de cellulose selon la revendication 1,
dans laquelle la matière première à base de cellulose est une poudre de papier fine et la matière première principale comprend 51 à 56 parties en masse de la poudre de papier fine.

3. Feuille de résine contenant une matière première à base de cellulose selon la revendication 1 ou la revendication 2,
dans laquelle la première résine de polyoléfine et la seconde résine de polyoléfine sont toutes les deux du polypropylène et
l'élastomère est un copolymère comprenant du propylène comme un monomère.

4. Feuille de résine contenant une matière première à base de cellulose selon l'une quelconque des revendications 1 à 3,
comprenant un additif dans un rapport de 2 à 10 parties en masse par rapport à 100 parties en masse de la matière première principale, et
l'additif comprend 1,8 à 4,0 parties en masse d'un dispersant comprenant un acide gras supérieur comme matière première et 0,2 à 0,5 parties en masse d'un lubrifiant externe.

5. Feuille de résine contenant une matière première à base de cellulose selon la revendication 4,
dans laquelle l'additif comprend en outre 0 à 6,0 parties en masse d'une résine contenant un colorant.

6. Feuille de résine contenant une matière première à base de cellulose selon l'une quelconque des revendications 1 à 5,
dans laquelle une couche de revêtement de résine de polyoléfine est fournie sur au moins une de ses surfaces.

7. Feuille de résine contenant une matière première à base de cellulose selon l'une quelconque des revendications 1 à 6,
dans laquelle les parties en masse de la première résine de polyoléfine et les parties en masse de la seconde polyoléfine ne sont pas moins de 2 fois et pas plus de 5 fois les parties en masse de l'élastomère.

8. Feuille de résine contenant une matière première à base de cellulose selon l'une quelconque des revendications 1 à 7,
dans laquelle une épaisseur de celle-ci est de 0,8 mm ou moins.

9. Feuille de résine contenant une matière première à base de cellulose selon l'une quelconque des revendications 1 à 8,
dans laquelle une largeur de celle-ci est de 1 000 mm ou plus.

10. Feuille de résine contenant une matière première à base de cellulose selon l'une quelconque de revendications 1 à 9,
dans laquelle un rapport d'une masse de la matière première à base de cellulose à une masse totale de la feuille de résine contenant la matière première à base de cellulose est de 50 % ou plus.
